# EUROPÄISCHE PATENTSCHRIFT

(11) **EP 0 730 620 B1**
(45) Veröffentlichungstag und Bekanntmachung des Hinweises auf die Patenterteilung: **14.04.1999**
(21) Anmeldenummer: 95931074.9
(22) Anmeldetag: 22.09.1995
(51) Int. Cl.: C08K 3/00, D21H 19/38

(54) **SCHICHTPRESSSTOFFPLATTEN ENTHALTEND KATALYTISCH GEFÄRBTE RESITE SOWIE EIN VERFAHREN ZU DEREN HERSTELLUNG**
LAMINATES COMPRISING CATALYTICALLY COLOURED RESITES AND A PROCESS FOR THEIR PRODUCTION
LAMINATES COMPRENANT DES RESITES TEINTS PAR PROCEDE CATALYTIQUE ET LEUR PROCEDE DE PRODUCTION

(30) Priorität: 22.09.1994 AT 1801/94
(43) Veröffentlichungstag der Anmeldung: 11.09.1996
(73) Patentinhaber: ISOVOLTA Österreichische Isolierstoffwerke Aktiengesellschaft, 2355 Wiener Neudorf (AT)
(72) Erfinder: WEHRMANN, Felix, A-1190 Wien (AT)
(74) Vertreter: Dungler, Karin
(86) Internationale Anmeldenummer: AT9500184
(87) Internationale Veröffentlichungsnummer: WO9609340

(56) Entgegenhaltungen:
- DATABASE WPI Derwent Publications Ltd., London, GB; AN 74-27824V & JP,A,48 102 090 (KOGYO GIJUTSUIN) , 21.Dezember 1973
- DATABASE WPI Derwent Publications Ltd., London, GB; AN 93-040209 & JP,A,04 364 940 (SUMITOMO BAKELITE CO) , 17.Dezember 1992
- DATABASE WPI Derwent Publications Ltd., London, GB; AN 83-813610 & SU,A,989 042 (DNEPR MINERAL RESOU) , 15.Januar 1983

## Beschreibung

Unter Resite versteht man unschmelzbare und unlösliche Phenolharze im C-Zustand, die beispielsweise für Gießharze, Werkzeugharze und Formmassen verwendet werden (Kunststoff-Handbuch 1988, Band 10, S.210 ff, S. 542 ff). Resite werden durch Vernetzung aus Resolen (A-Zustand) und Resitolen (B-Zustand) gebildet. Ihre Einfärbung wird mit Alkohol oder phenollöslichen Pigmentfarbstoffen, gegebenenfalls in Kombination mit anorganischen Pigmenten durchgeführt. Als Farbpigmente finden Eisenoxid, Erdfarben sowie Titandioxid Anwendung.

Der Einsatz von Resiten ist aus mehreren technischen Anwendungsgebieten vorbekannt; so beschreibt beispielsweise die JP-A-48102090 ein Verfahren zur Herstellung von hochtemperaturbeständigen Werkstoffen auf der Basis von Resiten, welchen u.a. Eisen III-Salze zugesetzt wurden. Diese Eisen III-Salze dienen dazu, die Oxidationsbeständigkeit der Hochtemperaturwerkstoffe zu erhöhen.

Die SU-A-989042 hingegen beschreibt eine Polymerzementiermasse auf Basis von Resolharzen unter Zusatz von Eisen III-Chloriden als Härtungsmittel für die Isolierung von Absorptionsbereichen und Wasserzuflüssen in Bohrlöchern. Durch den Zusatz der Eisen III-Chloridsalze soll die Harzmasse derart ausgehärtet werden, daß sie unter Einfluß von Wasser einen festen, sohin wasserundurchlässigen Pfropfen bildet.

Ferner bilden Resite als Harzkomponente zusammen mit Natronkraftpapieren aus ungebleichtem Sulfitzellstoff den Aufbau der Kernlagen in Hochdruckschichtpreßstoffen (HPL), siehe Kunststoff-Handbuch, Band 10, 1988. Da HPL vorzugsweise in Dicken von 0,6 bis 1,5 mm auf Holzwerkstoff aufgeleimt wurden und die braunen Schnittkanten somit keinerlei dekorative Bedeutung hatten, bestand kein Bedarf hinsichtlich der Einfärbung der Kernlagen. Mit dem zunehmenden Einsatz von Compactplatten, das heißt einoder beidseitig mit dekorativen Schichten versehene HPL in Stärken von über 2 mm hat es sich gezeigt, daß die Farbe der Schnittkanten ein wesentliches dekoratives Element darstellt. Dabei war es störend, daß - bedingt durch die Herstellungsbedingungen wie Harzmenge, Druck, Temperatur und Feuchtigkeit - die Schnittkante zwar im allgemeinen braun, jedoch mit unterschiedlicher Farbintensität eingefärbt war. Insbesondere profilierte, gefräste Kanten bekamen dadurch ein unschönes Aussehen.

Es wurde daher versucht, die Kernlagen in Compactplatten insofern einzufärben, daß dem Imprägnierharz, welches beispielsweise ein Resol sein kann, Farbpigmente beigemengt wurden. Dabei betrug der Anteil im Fall von organischen Farbpigmenten 1 - 0,5 % und im Fall von anorganischen Farbpigmenten 0,5-2 % bezogen auf den Festkörpergehalt des eingesetzten Resols. Es hat sich jedoch gezeigt, daß diese Pigmentzusätze das Penetrationsverhalten des Resols in den Papierbahnen verschlechtern. Dadurch entsteht ein unregelmäßiger Harzauftrag in den Kernlagen der Compactplatte, was wiederum deren mechanische Eigenhaften negativ beeinflußt. Aufgabe der Erfindung ist es nun, Schichtpreßstoffplatten mit gleichmäßig dunkel eingefärbter Kernschicht bereitzustellen, welche zumindestens ebenso gute mechanische Eigenschaften besitzen wie Schichtpreßstoffplatten, deren Kernschichten nicht eingefärbt sind.

Erfindungsgemäß wird ein Verfahren zur Herstellung derartiger Schichtpreßstoffplatten vorgeschlagen, welches dadurch gekennzeichnet ist, daß das als Imprägnierharz eingesetzte Resol mit katalytischen Mengen an Eisensalzen versetzt wird, daß anschließend die zu imprägnierenden Kraftpapierbahnen mit diesem Eisensalz-hältigen Imprägnierharz getränkt und daß nach erfolgter Trocknung ein Stapel dieser getränkten Kraftpapierbahnen in einer Presse unter erhöhtem Druck und erhöhter Temperatur verpreßt wird, wobei durch Vernetzung des Resols/Resitols das gleichmäßig dunkel gefärbte Resit in der Kernschicht der Schichtpreßstoffplatte entsteht.

Weitere Vorteile des erfindungsgemäßen Verfahrens bestehen darin, daß die dem Imprägnierharz zugesetzten Eisensalze Eisen II- oder Eisen III-Salze sind, welche als Chloride, Sulfate oder Nitrate vorliegen. Der Anteil an eingesetzten Eisensalzen beträgt vorzugsweise 0,01 - 1 Gew.%, insbesondere 0,1 - 0,3 Gew.%, bezogen auf den Festkörpergehalt des Imprägnierharzes.

Ferner wird vorgeschlagen, dem Imprägnierharz Zusatzstoffe in Form von Farbpigmenten zuzugegeben, deren Anteil maximal 0,05 Gew.%, bezogen auf den Festkörpergehalt des Imprägnierharzes, beträgt.

Die Erfindung betrifft ferner eine Schichtpreßstoffplatte (HPL), vorzugsweise Compactplatte, mit gleichmäßig dunkel eingefärbter Kernschicht, welche nach dem oben beschriebenen erfindungsgemäßen Verfahren hergestellt ist.

### Ein Weg zur Ausführung der Erfindung

Dem Resol, welches in wässeriger Lösung vorliegt, werden 0.16 % Eisensulfat bezogen auf den Festkörpergehalt des Resols unter Rühren bei Raumtemperatur zugesetzt, wobei das Eisen sowohl in seiner zweiwertigen als auch in seiner dreiwertigen Form vorliegen kann. Diese Lösung kann beispielsweise als Imprägnierharz verwendet werden. Dabei werden in einer Harzflotte die Kraftpapierbahnen getränk und anschließend bei erhöhter Temperatur getrocknet. Das nummehr durch Vernetzung des Resols entstandene Resitol beginnt sich nun, bedingt durch die katalytischen Mengen an Eisensulfat dunkelviolett zu färben. Anschließend werden mehrere dieser getränkten Kraftpapierbahnen in einer Presse bei erhöhtem Druck und erhöhter Temperatur zu einer Kernschicht verpreßt. Dadurch erfolgt die Überführung in das Resit, wobei dessen tiefbraune Färbung entsteht.

Werden nunmehr an die Kernlagen ein- oder beidseitig vor dem Verpressen eine oder zwei Dekorschichten angebracht, so wird nach dem erfindungsgemäßen Verfahren eine Compactplatte bereitgestellt, welche auch nach ihrer weiteren Bearbeitung, beispielsweise mit Fräsmaschinen, den hohen optischen Anforderungen, bedingt duch den gleichmäßig dunkel gefärbten Kern, entspricht.

### Gewerbliche Anwendbarkeit

Die katalytisch gefärbten Resite finden Anwendung bei der Herstellung von Formkörpern bzw. Schichtpreßstoffplatten. Diese sollen bei deren Weiterverarbeitung an ihren Schnittkanten aus dekorativen Gründen eine gleichmäßig dunkle Färbung aufweisen.

## Patentansprüche

1. Verfahren zur Herstellung einer Schichtpreßstoffplatte mit gleichmäßig dunkel eingefärbter Kernschicht, dadurch gekennzeichnet, daß das als Imprägnierharz eingesetzte Resol mit katalytischen Mengen an Eisensalzen versetzt wird, daß anschließend die zu imprägnierenden Kraftpapierbahnen mit diesem Eisensalz-hältigen Imprägnierharz getränkt und daß nach erfolgter Trocknung ein Stapel dieser getränkten Kraftpapierbahnen in einer Presse unter erhöhtem Druck und erhöhter Temperatur verpreßt wird, wobei durch Vernetzung des Resols/Resitols das gleichmäßig dunkel gefärbte Resit in der Kernschicht der Schichtpreßstoffplatte entsteht.

2. Verfahren nach Anspruch 1, dadurch gekennzeichnet, daß die Eisensalze Eisen II-Salze sind.

3. Verfahren nach Anspruch 1, dadurch gekennzeichnet, daß die Eisensalze Eisen III-Salze sind.

4. Verfahren nach einem der Ansprüche 1 bis 3, dadurch gekennzeichnet, daß die Eisensalze Chloride sind.

5. Verfahren nach einem der Ansprüche 1 bis 3, dadurch gekennzeichnet, daß die Eisensalze Sulfate sind.

6. Verfahren nach einem der Ansprüche 1 bis 3, dadurch gekennzeichnet, daß die Eisensalze Nitrate sind.

7. Verfahren nach einem der Ansprüche 1 bis 6, dadurch gekennzeichnet, daß der Anteil an Eisensalzen 0,01 - 1 %, vorzugsweise 0,1 - 0,3 %, bezogen auf den Festkörpergehalt beträgt.

8. Verfahren nach einem der Ansprüche 1 bis 7, dadurch gekennzeichnet, daß der Zusatzstoff ein Farbpigment ist.

9. Verfahren nach Anspruch 8, dadurch gekennzeichnet, daß der Anteil an Farbpigment maximal 0,05 %, bezogen auf den Festkörpergehalt des Harzes beträgt.

10. Schichtpreßstoffplatte (HPL), vorzugsweise Compactplatte, enthaltend in der Kernschicht ein gleichmäßig dunkel eingefärbtes Resit herstellbar gemäß einem Verfahren der Ansprüche 1 bis 9.

## Claims

1. A method of producing a laminate with a uniformly dark-coloured core layer, characterised in that catalytic quantities of iron salts are added to the resol used as the impregnating resin, in that subsequently the webs of kraft paper to be impregnated are impregnated with this impregnating resin containing iron salts, and in that after drying has been carried out a stack of these impregnated webs of kraft paper is pressed in a press under high pressure and high temperature, wherein by cross-linking of the resol/resitol the uniformly dark-coloured resit is formed in the core layer of the laminated plastics sheet

2. A method according to Claim 1, characterised in that the iron salts are iron II salts.

3. A method according to Claim 1, characterised in that the iron salts are iron III salts.

4. A method according to any one of Claims 1 to 3, characterised in that the iron salts are chlorides.

5. A method according to any one of Claims 1 to 3, characterised in that the iron salts are sulphates.

6. A method according to any one of Claims 1 to 3, characterised in that the iron salts are nitrates.

7. A method according to any one of Claims 1 to 6, characterised in that the proportion of iron salts is 0.01 to 1 %, preferably 0.1 to 0.3 %, in relation to the solids content.

8. A method according to any one of Claims 1 to 7, characterised in that the additive is a coloured pigment.

9. A method according to Claim 8, characterised in that the proportion of coloured pigment is at maximum 0.05 %, in relation to the solids content of the resin.

10. A laminated plastics sheet a so-called high pressure laminate (HPL), preferably a compact sheet, containing in the core layer a uniformly dark-coloured resit which can be produced in accordance with a method of Claims 1 to 9.

## Revendications

1. Procédé de fabrication d'une plaque stratifiée en matériau pressé présentant une couche centrale uniformément colorée en sombre, caractérisé en ce qu'on utilise comme résine d'imprégnation du Resol additionné de quantités catalytiques de sels de fer, en ce que, ensuite, on imbibe ces bandes de papier kraft à imprégner avec cette résine d'imprégnation contenant des sels de fer, et en ce que, après la réalisation du séchage, on presse un empilement de ces bandes de papier kraft imbibées dans une presse sous pression et température élevées, de telle façon que par réticulation du Resol/Resitol, il se forme la résine colorée uniformément en sombre dans la couche de coeur de la plaque stratifiée en matériau pressé.

2. Procédé selon la revendication 1, caractérisé en ce que les sels de fer sont des sels de fer II.

3. Procédé selon la revendication 1, caractérisé en ce que les sels de fer sont des sels de fer III.

4. Procédé selon l'une des revendications 1 à 3, caractérisé en ce que les sels de fer sont des chlorures.

5. Procédé selon l'une des revendications 1 à 3, caractérisé en ce que les sels de fer sont des sulfates.

6. Procédé selon l'une des revendications 1 à 3, caractérisé en ce que les sels de fer sont des nitrates.

7. Procédé selon l'une des revendications 1 à 6, caractérisé en ce que la proportion en sels de fer atteint 0,01 à 1 %, de préférence de 0,1 à 0,3 %, rapportée à la teneur en corps solides.

8. Procédé selon l'une des revendications 1 à 7, caractérisé en ce que la matière d'addition est un pigment de couleur.

9. Procédé selon la revendication 8, caractérisé en ce que la proportion en segment de couleur est au maximum de 0,05 %, rapportée à la teneur en corps solides de la résine.

10. Plaque stratifiée en matériau pressé (HPL), de préférence plaque compacte contenant dans la couche centrale un Resit coloré uniformément sombre, et susceptible d'être fabriquée par un procédé selon les revendications 1 à 9.
